(19) Europäisches Patentamt / European Patent Office / Office européen des brevets

(11) **EP 2 855 114 B1**

(12) **FASCICULE DE BREVET EUROPEEN**

(45) Date de publication et mention
de la délivrance du brevet:
**31.08.2016 Bulletin 2016/35**

(21) Numéro de dépôt: **13727274.6**

(22) Date de dépôt: **13.05.2013**

(51) Int Cl.:
*B29C 49/06* (2006.01)     *B29C 49/12* (2006.01)
*B29C 49/16* (2006.01)     *B29C 49/58* (2006.01)
*B29C 49/64* (2006.01)     *B29C 49/78* (2006.01)
*B29L 31/00* (2006.01)     *B29K 105/00* (2006.01)

(86) Numéro de dépôt international:
**PCT/FR2013/051036**

(87) Numéro de publication internationale:
**WO 2013/178903 (05.12.2013 Gazette 2013/49)**

(54) **PROCÉDÉ DE FABRICATION D'UN RÉCIPIENT À PARTIR D'UNE ÉBAUCHE, AVEC RÉTROACTION EN FONCTION D'UNE PRESSION RÉELLE DE FIN DE PRÉSOUFFLAGE**

VERFAHREN ZUR HERSTELLUNG EINES BEHÄLTERS AUS EINEM ROHLING, EINSCHLIESSLICH FEEDBACK IN ÜBEREINSTIMMUNG MIT EINEM IST-DRUCK AM ENDE DES VORBLASSCHRITTS

METHOD FOR MANUFACTURING A CONTAINER FROM A BLANK, INCLUDING FEEDBACK IN ACCORDANCE WITH AN ACTUAL PRESSURE AT THE END OF THE PRE-BLOWING STEP

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.05.2012 FR 1255007**

(43) Date de publication de la demande:
**08.04.2015 Bulletin 2015/15**

(73) Titulaire: **Sidel Participations
76930 Octeville sur Mer (FR)**

(72) Inventeurs:
• **DEAU, Thierry**
**F-76930 Octeville Sur Mer (FR)**
• **GENDRE, Julien**
**F-76930 Octeville Sur Mer (FR)**

(74) Mandataire: **Siloret, Patrick
Sidel Blowing & Services
Avenue de la Patrouille de France
76930 Octeville-sur-Mer (FR)**

(56) Documents cités:
EP-A2- 1 974 892      WO-A1-2012/035260
DE-A1-102004 014 653      US-A1- 2010 276 849

**Description**

L'invention a trait à la fabrication des récipients par soufflage ou étirage soufflage. à partir d'ébauches en matière plastique. Par « ébauche », on entend désigner à la fois les préformes injectées, et les récipients intermédiaires obtenus à l'issue d'une première opération de soufflage à partir d'une préforme, et destinés à subir au moins un second soufflage.

Classiquement, on chauffe d'abord l'ébauche à une température supérieure à la température de transition vitreuse de la matière, puis on introduit la préforme ainsi chauffée dans un moule, avant d'y injecter un fluide (notamment un gaz tel que de l'air) sous pression pour obtenir le récipient final.

L'injection comprend elle-même plusieurs opérations successives. Une première opération, dite de présoufflage, consiste à injecter dans l'ébauche un gaz sous une pression réduite (dite de présoufflage, généralement comprise entre 5 et 16 bars). Une seconde opération, dite de soufflage proprement dite, consiste à injecter dans l'ébauche un gaz sous haute pression (dite de soufflage, généralement supérieure à 25 bars, et couramment comprise entre 30 et 35 bars).

Dans un contexte de production industrielle, les cadences de fabrication atteignent plusieurs dizaines de milliers de récipients par heure et par machine, qui comprend ordinairement une série de moules montés à la périphérie d'un carrousel tournant). Le temps de cycle, entre l'instant où l'ébauche est introduite dans le moule et l'instant où le récipient formé est éjecté du moule, est de quelques secondes. L'opération de présoufflage elle-même dure quelques dixièmes de seconde seulement, généralement de l'ordre de deux dixièmes (environ 200 ms).

Une mauvaise répartition de la matière est un défaut récurrent constaté sur les récipients. Il ne s'agit pas nécessairement de veiller à ce que l'épaisseur de la paroi du récipient soit constante, car dans certains cas il peut être souhaitable d'épaissir certaines zones, en particulier celles destinées à subir des contraintes importantes (notamment à proximité du fond). Il s'agit plutôt de veiller à ce que l'épaisseur de matière corresponde au cahier des charges du récipient, tel que défini en fonction de sa forme et de son utilisation.

Il est connu (cf. le document WO2008/081107 au nom de la demanderesse) de corréler des points singuliers d'une courbe réelle de soufflage avec des paramètres machine (notamment le débit ou la pression de présoufflage), et d'appliquer des corrections des paramètres en fonction de divergences constatées aux points singuliers.

Des procédés apparentés sont connus des documents US 2010/0276849 et WO 2012/035260.

Grâce à cette approche, des progrès considérables ont été réalisés dans la commande des machines de soufflage, permettant d'optimiser la qualité des récipients. Cependant, il faut admettre que toute erreur dans la détection des points singuliers peut aboutir à une erreur de paramétrage. Les techniques de calcul méritent par conséquent d'être perfectionnées, afin de fiabiliser le contrôle de la machine, et en particulier la chaîne de rétroaction.

A cet effet, il est proposé, en premier lieu, un procédé de fabrication d'un récipient par étirage soufflage dans un moule à partir d'une ébauche en matière plastique, qui comprend les opérations consistant à :

- introduire l'ébauche, préalablement chauffée, dans le moule ;
- commander l'ouverture d'une électrovanne de présoufflage pour mettre en communication l'intérieur du moule avec une source de gaz à une pression de présoufflage et un débit de présoufflage prédéterminés ;
- mesurer la pression régnant à l'intérieur de l'ébauche ;
- détecter un instant, dit instant réel de début de présoufflage, où la pression dans l'ébauche commence à croître ;
- mémoriser cet instant ;
- calculer un instant de fin de présoufflage tel que :

$$t_F = t_A + \Delta t - \delta,$$

où :

    $\Delta t$ est une durée prédéfinie d'ouverture de l'électrovanne de présoufflage,
    $\delta$ est une constante prédéterminée,

- en déduire une pression réelle de fin de présoufflage à partir des mesures de pression effectuées,
- comparer la pression réelle de fin de présoufflage ainsi déterminée avec une pression théorique de fin de présoufflage prédéterminée,
- si la pression réelle de fin de présoufflage et la pression théorique de fin de présoufflage sont décrétées non confondues, commander une modification du débit de présoufflage.

Les caractéristiques suivantes peuvent en outre être prévues, seules ou en combinaison :

- la constante 5 correspond au temps de réponse d'une électrovanne de soufflage dont l'ouverture met en communication l'intérieur du moule avec une source de gaz à une pression de soufflage supérieure à la pression de présoufflage ;
- il est prévu, si la pression réelle de fin de présoufflage est décrétée supérieure à la pression théorique de fin de présoufflage, une opération consistant à commander une diminution du débit de présoufflage ;
- il est prévu, si la pression réelle de fin de présoufflage est décrétée inférieure à la pression théorique de fin de présoufflage, une opération consistant à commander une augmentation du débit de présoufflage ;

- la pression réelle de fin de présoufflage est calculée par interpolation à partir de mesures de pression mémorisées dans le moule à des instants antérieurs et postérieurs à l'instant calculé de fin de présoufflage.

Il est proposé, en deuxième lieu, un produit programme d'ordinateur destiné à être implémenté sur une unité de contrôle d'une machine de fabrication de récipients à partir d'ébauches en matière plastique, qui comprend des instructions pour la mise en oeuvre des opérations du procédé présenté ci-dessus.

D'autres objets et avantages de l'invention apparaîtront à la lumière de la description faite ci-après en référence aux dessins annexés dans lesquels :

- la figure 1 est une vue schématique illustrant une machine de fabrication de récipients, et montrant plus précisément, en coupe, un moule dans lequel est soufflé un récipient (en trait continu) à partir d'une préforme (en trait interrompu) ;
- la figure 2 est un diagramme sur lequel est tracée une courbe illustrant les variations de la pression régnant dans la préforme lors de son présoufflage.

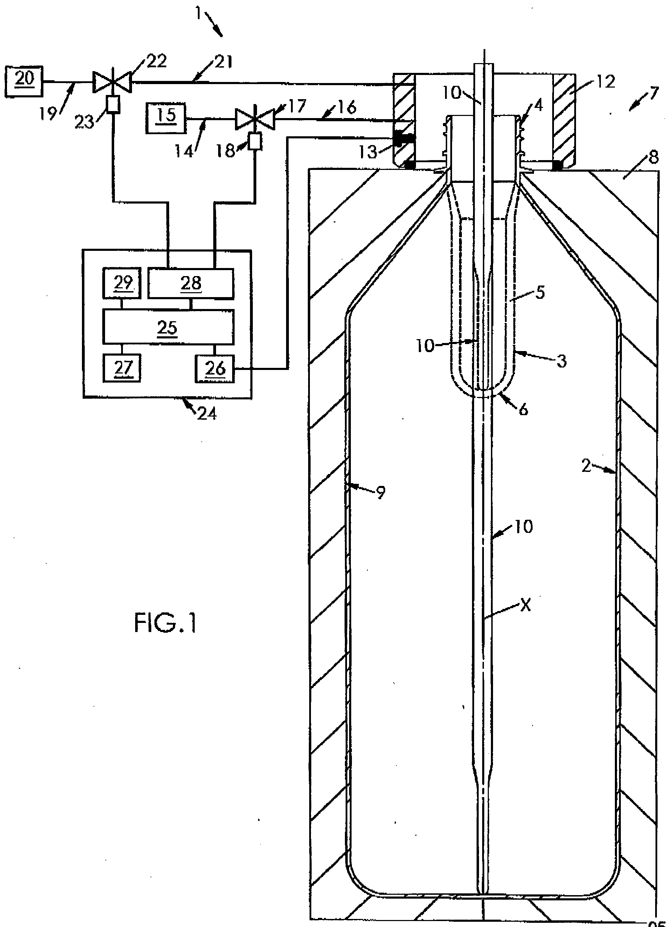

Sur la figure 1 est partiellement représentée une machine 1 pour la fabrication de récipients 2 à partir d'ébauches 3 en matière plastique telle que PET (polyéthylène téréphtalate). Suivant un mode préféré de réalisation, les ébauches 3 sont des préformes à partir desquelles les récipients 2 finaux sont directement obtenus, sans passage par un récipient intermédiaire. Chaque préforme 3 comprend un col 4 (qui ne subit pas de déformation au cours de la formation du récipient 2), et un corps 5 cylindrique terminé par un fond 6 hémisphérique.

La machine 1 est équipée d'une pluralité de postes 7 de formage montées à la périphérie d'un carrousel et comprenant chacun un moule 8 composé de deux demi-moules qui définissent ensemble une cavité 9 interne à l'empreinte du récipient 2.

Chaque moule 8 est destiné à recevoir une préforme 3 en provenance d'un four situé en amont des postes 7 de formage et où chaque préforme 3 est portée, au moyen par exemple de lampes émettant un rayonnement dans l'infrarouge, à une température $T$ supérieure à la température de transition vitreuse (environ 80°C pour le PET) avant d'être transférée à un poste 7 de formage.

Chaque poste 7 de formage comprend en outre :

- une tige 10 d'étirage montée coulissante par rapport au moule 8 le long d'un axe $X$ principal (généralement de révolution),
- un dispositif (non représenté) de commande du déplacement axial de la tige 10 d'étirage, de préférence du type électromagnétique,
- une tuyère 12 qui vient coiffer une face supérieure du moule 8, en venant recouvrir le col b qui en dépasse,
- un capteur 13 de pression monté sur la tuyère 12 pour y effectuer une mesure de la pression régnant dans la préforme 3, au moins au cours de l'opération de présoufflage.

La machine 1 comprend par ailleurs :

- un circuit 14 de présoufflage comprenant une source 15 de fluide (en l'espèce un gaz et de préférence de l'air) de présoufflage à moyenne pression (comprise entre 5 et 16 bars) et un conduit 16 (qui peut être formé au moins partiellement dans une paroi latérale de la tuyère 12) reliant la source 15 à chaque tuyère 12 avec interposition d'une électrovanne 17 de présoufflage sur laquelle est monté un régulateur 18 du débit $D_P$ de présoufflage,
- un circuit 19 de soufflage comprenant une source 20 de fluide (en l'espèce un gaz et de préférence de l'air) de soufflage à haute pression (comprise entre 25 et 40 bars) et un conduit 21 (qui peut être formé au moins partiellement dans une paroi latérale de la tuyère 12) reliant la source 20 à la tuyère 12 avec interposition d'une électrovanne 22 de soufflage sur laquelle est monté un régulateur 23 du débit Ds de soufflage,
- une unité 24 de contrôle électronique, notamment sous forme d'un automate programmable industriel (API), reliée électriquement au capteur 13 de pression, aux électrovannes 17, 22 via leurs régulateurs 18, 23 de débit respectifs, et le cas échéant au dispositif de commande du déplacement de la tige 10 d'étirage.

Plus précisément, l'unité 24 de contrôle comprend :

- un processeur 25,
- un module 26 d'entrée analogique relié au capteur 13 de pression pour en recueillir les mesures et les convertir en signal numérique pour traitement par le processeur 25,
- une mémoire 27 reliée au processeur 25 pour le stockage de données issues du capteur 13 (après conversion),
- un module 28 de sortie analogique commandé par le processeur 25, et contrôlant les électrovannes 17, 22 via leurs régulateurs 18, 23 de débit, de manière à moduler les débits $D_P$, Ds d'air fourni à la tuyère 12, et le cas échéant le dispositif de commande de déplacement axial de la tige 10 d'étirage.
- une interface 29 de communication pour l'implémentation dans l'unité 24 de contrôle du programme régentant son fonctionnement.

Pour la réalisation concrète de la tuyère 12 et l'intégration des électrovannes **17, 22** avec les régulateurs **18, 23** de débit, on pourra se référer à la demande FR 2 8,72 082 (Sidel) ou à son équivalent international WO 2006/008380.

On décrit ci-après le formage d'un récipient **2** à partir d'une préforme 3 préalablement chauffée.

La préforme **3** chaude, à une température supérieure à la température de transition vitreuse de la matière (dans le cas du PET, la préforme est chauffée à une température généralement comprise entre 120°C et 140°C), est introduite col **4** en haut dans un moule **8** préalablement ouvert, la tige **10** d'étirage étant dans une position escamotée pour permettre l'introduction de la préforme **3**.

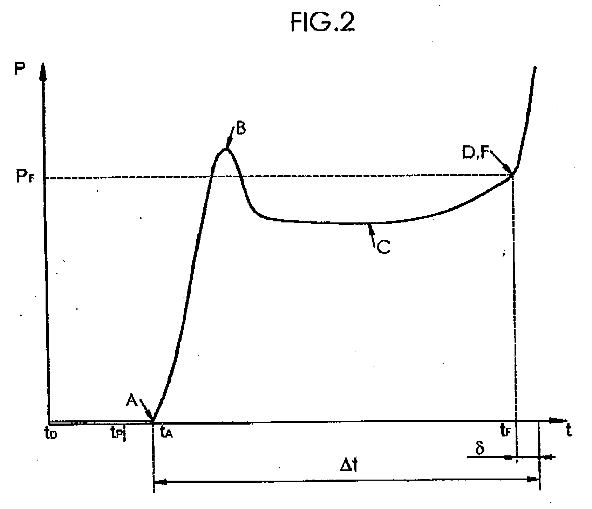

Au fur et à mesure de la rotation du carrousel sur lequel est monté le poste **7** de formage, le moule **8** se referme sur la préforme **3** à un instant dénommé top départ $t_D$, qui constitue l'origine de l'axe des temps (abscisses) sur le diagramme de la figure 2. A partir de cet instant, l'unité **24** de contrôle commande en continu une mesure de la pression **P** régnant dans la préforme **3**, les valeurs mesurées par le capteur **13** de pression étant recueillies par le module **26** d'entrée, converties puis inscrites dans la mémoire **27**.

Le terme « en continu » signifie que la période à laquelle sont effectuées les mesures de pression est faible devant les temps nécessaires aux variations significatives de pression dans la préforme 3.

A cet effet, on aura avantage à choisir un capteur **13** de pression à hautes performances, permettant de réaliser des mesures de pression à une période inférieure ou égale à 5 ms (milliseconde), de préférence inférieure ou égale à 2 ms, l'idéal étant de pouvoir effectuer les mesures à une période de 1 ms.

À un instant prédéterminé, dénommé top présoufflage $t_P$, l'unité **24** de contrôle commande l'ouverture de l'électrovanne **17** de présoufflage pour mettre en communication l'intérieur de la préforme **3** avec la source **15** de fluide de présoufflage.

En pratique, l'instant réel à partir duquel la pression P dans la préforme **3** commence à croître accuse un retard par rapport au top présoufflage $t_P$, ce retard correspondant au temps de réponse de l'électrovanne **17** de présoufflage,

L'étirage débute dès lors que la tige **10** d'étirage atteint une position médiane (représentée en trait interrompu sur la figure 1) dans laquelle la tige **10** d'étirage entre en contact avec le fond **6** de la préforme **3**.

On note **A** le point de la courbe à partir duquel la pression commence à croître, qui correspond à l'instant réel, noté $t_A$, du début du présoufflage.

La pression dans la préforme **3** croît à partir du point **A** à mesure qu'elle est étirée de manière élastique, le débit d'air introduit dans la préforme **3** étant supérieur à l'accroissement du volume interne de la préforme **3**, jusqu'à atteindre un pic local en un point noté **B,** à un instant noté $t_B$. Le pic local **B** est attribué à un seuil d'écoulement plastique de la préforme 3.

Au point **B** la pente de la courbe de soufflage est nulle, cette pente s'inversant de gauche (où elle est positive) à droite (où elle est négative) du point **B.**

Passé le pic local au point **B,** la pression **P** subit une diminution attribuée à l'expansion radiale de la préforme **3** qui, son seuil d'écoulement plastique dépassé, subit une déformation plastique

On voit sur la figure 2 qu'à partir du point **B** la pression subit une première phase de décroissance rapide, la pente de la courbe de pression étant forte, suivie d'une deuxième phase de décroissance lente, la pente de la courbe étant faible.

La pression **P** atteint alors un minimum local en un point noté **C,** à partir duquel la pression croît à nouveau, d'abord lentement, puis plus rapidement.

Passée une temporisation, pendant laquelle on maintient ouverte l'électrovanne **17** de présoufflage, on lance le soufflage en commandant simultanément la fermeture de l'électrovanne **17** de présoufflage et l'ouverture de l'électrovanne **22** de soufflage, ce qui provoque une brusque augmentation de la pression dans la préforme **3.** Cette augmentation est illustrée par la soudaine inflexion de la courbe de pression à l'extrême droite de la figure 2, à partir d'un point noté **D** qui correspond à la fin réelle du présoufflage et au début du soufflage.

On ne s'intéresse pas à l'opération de soufflage, ce qui explique que la courbe de la figure 2 soit interrompue au début de celle-ci.

L'hypothèse d'une influence du présoufflage sur la qualité du récipient final a déjà été formulée. De nombreux essais ont été conduits avant qu'il soit possible d'identifier, pour une préforme 3 et un récipient final 2 données, une courbe de pression permettant d'obtenir le récipient présentant des caractéristiques (et notamment une répartition de la matière) aussi proches que possible d'un cahier des charges préétabli.

Cette courbe de pression est mémorisée dans l'unité **24** de contrôle en étant inscrite dans la mémoire **27.**

L'influence des points **A** et **B** a déjà été démontrée et exploitée, cf. le document WO2008/081107 précité. De même, il a été indiqué comme souhaitable de faire converger les points **C** et **D** en avançant l'instant de commande d'ouverture de l'électrovanne de soufflage.

Il a cependant été constaté que cette approche n'aboutit pas nécessairement à une meilleure répartition de la matière dans le récipient final obtenu. En revanche, des essais ont démontré que la pression mesurée au point **D** a une influence sur la répartition de la matière. Toutefois, la mesure du point **D,** qui n'est ni un minimum local, ni un maximum local, est délicate et peut aboutir à une prise en compte d'une pression erronée.

C'est pourquoi, au lieu de tenter de détecter le point **D** sur la courbe, il est proposé une approche mixte combinant mesure et calcul. On recherche en effet un point, noté **F,** supposé confondu avec le point **D** et obtenu grâce à la formule suivante :

$$t_F = t_A + \Delta t - \delta,$$

où :

$t_F$ est l'instant (en abscisse sur le graphe de la figure 2) du point F, décrété comme étant l'instant réel de fin de présoufflage,

$\Delta t$ est la durée prédéfinie (programmée dans l'unité **24** de contrôle) d'ouverture de l'électrovanne **17** de présoufflage,

$\delta$ est une constante prédéterminée fonction de l'électrovanne **22** de soufflage. En l'espèce, $\delta$ est le temps (programmé dans l'unité **24** de contrôle) de réponse de l'électrovanne **22** de soufflage, c'est-à-dire le temps s'écoulant entre l'instant de commande d'ouverture de l'électrovanne **22** et l'instant de son ouverture effective. Ce temps de réponse peut atteindre plusieurs millisecondes, par exemple de l'ordre de 5 ms.

Le point **F** fournit ainsi une approximation précise du point **D,** puisqu'il se base sur le point A réel (correspondant au début effectif du présoufflage), auquel est ajoutée la durée programmée d'ouverture de l'électrovanne **17** de présoufflage et retranché le temps de réponse de l'électrovanne **22** de présoufflage. Ce temps $\delta$ de réponse est normalement fourni par le constructeur de l'électrovanne **22** de soufflage. L'incertitude sur cette donnée existe, mais elle est faible (de l'ordre de 1 ms) et n'a que peu d'impact sur la fiabilité du calcul.

Il est à noter que le temps $\delta$ de réponse peut évoluer au cours du temps, au fur et à mesure du vieillissement des composants. Il en résulte une modification de la valeur de l'instant $t_F$. Afin de calculer correctement cet instant, il est préférable d'adapter la valeur du temps $\delta$ de réponse au cours du temps dans la programmation machine. L'évolution du temps $\delta$ de réponse peut être fournie par le constructeur, ou déduite de mesures effectuées directement sur la machine.

Une fois calculé l'instant $t_F$, l'unité **24** de contrôle en déduit, grâce à la courbe des variations mémorisées de la pression P (figure 2) la valeur de la pression correspondante $P_F$. Dans l'hypothèse où une mesure de pression a effectivement été réalisée à l'instant $t_F$, il suffit d'extraire de la courbe la pression correspondante. Dans l'hypothèse où aucune mesure de pression n'a été réalisée à l'instant $t_F$, la pression correspondante peut être déduite par interpolation (linéaire ou polynomiale) à partir d'une sélection de mesures antérieures et postérieures.

L'unité **24** de contrôle compare alors la pression $P_F$ ainsi obtenue avec une valeur $P_{th}$ théorique pour laquelle il a été déterminé que la répartition de matière dans le récipient est satisfaisante, cette valeur $P_{th}$ théorique étant mémorisée dans l'unité **24** de contrôle en étant stockée dans la mémoire **27**.

Si $P_F$ et $P_{th}$ sont décrétées confondues, l'unité **24** de contrôle ne modifie pas les paramètres de présoufflage, la consigne appliquée au cycle suivant demeurant inchangée.

En revanche, $P_F$ et Pth sont décrétées non confondues, l'unité de contrôle commande une modification du débit $D_P$ de présoufflage.

En pratique, l'unité **24** de contrôle vérifie si la pression $P_F$ réelle se trouve dans une zone de tolérance définie autour de la valeur $Pth$ théorique. Lorsque la pression $P_F$ se trouve dans cette zone de tolérance, $P_F$ et Pth sont décrétées confondues, et les paramètres machine sont conservés pour le cycle suivant.

Lorsqu'en revanche $P_F$ se trouve hors de la zone de tolérance, $P_F$ et $P_{th}$ sont décrétées distinctes, et l'unité 24 de contrôle rétroagit sur le débit Dp de présoufflage afin de faire converger, au cycle suivant, $P_F$ vers la valeur $Pth$ théorique.

Le débit $D_P$ de présoufflage influe sur la pression $P_F$ de la manière suivante :

- une augmentation du débit $D_P$ de présoufflage entraîne une augmentation de la pression $P_F$,
- une diminution du débit $D_P$ de présoufflage entraîne une diminution de la pression $P_F$.

Dès lors :

- si $P_F$ est décrétée supérieure à $P_{th}$, l'unité **24** de contrôle commande, via son module **28** de sortie, une diminution du débit $D_P$ de présoufflage,
- si $P_F$ est décrétée inférieure à $P_{th}$, l'unité **24** de contrôle commande au contraire, via son module **28** de sortie, une augmentation du débit $D_P$ de présoufflage.

En pratique, les opérations de mémorisation de la courbe de pression, d'identification du point **A,** de calcul de l'instant $t_F$ et de $P_F$, de comparaison de $P_F$ la valeur théorique $P_{th}$, ainsi que la rétroaction sur le débit $D_P$ de présoufflage en fonction du résultat de cette comparaison, sont pilotées par l'unité **24** de contrôle, qui exécute les instructions d'un produit programme d'ordinateur implémenté à cet effet dans son processeur **25**.

## Revendications

1. Procédé de fabrication d'un récipient **(2)** par étirage soufflage dans un moule **(8)** à partir d'une ébauche **(3)** en matière plastique, qui comprend les opérations consistant à :

- introduire l'ébauche **(3),** préalablement chauffée, dans le moule **(8)** :
- commander l'ouverture d'une électrovanne **(17)** de présoufflage pour mettre en communication l'intérieur du moule **(8)** avec une source (15) de gaz à une pression de présoufflage **(P_P)**

et un débit **(D$_P$)** de présoufflage prédéterminés ;
- mesurer la pression (P) régnant à l'intérieur de l'ébauche **(3)** ;
- détecter un instant **(t$_A$)**, dit instant réel de début de présoufflage, où la pression **(P)** dans l'ébauche **(3)** commence à croître ;
- mémoriser cet instant **(t$_A$)** ;
- calculer un instant **(t$_F$)** de fin de présoufflage tel que :

$$t_F = t_A + \Delta t - \delta,$$

où :

$\Delta t$ est une durée prédéfinie d'ouverture de l'électrovanne (17) de présoufflage,
$\delta$ est une constante prédéterminée,

- en déduire une pression **(P$_F$)** réelle de fin de présoufflage à partir des mesures de pression effectuées,
- comparer la pression **(P$_F$)** réelle de fin de présoufflage ainsi déterminée avec une pression **(P$_{th}$)** théorique de fin de présoufflage prédéterminée,
- si la pression **(P$_F$)** réelle de fin de présoufflage et la pression **(P$_{th}$)** théorique de fin de présoufflage sont décrétées non confondues, commander une modification du débit **(D$_P$)** de présoufflage.

2. Procédé selon la revendication 1, **caractérisé en ce que** la constante $\delta$ correspond au temps de réponse d'une électrovanne **(22)** de soufflage dont l'ouverture met en communication l'intérieur du moule **(8)** avec une source (20) de gaz à une pression de soufflage supérieure à la pression de présoufflage.

3. Procédé selon la revendication 1 ou 2, qui comprend, si la pression **(P$_F$)** réelle de fin de présoufflage est décrétée supérieure à la pression **(P$_{th}$)** théorique de fin de présoufflage, une opération consistant à commander une diminution du débit **(D$_P$)** de présoufflage.

4. Procédé selon la revendication 1 ou 2, qui comprend, si la pression **(P$_F$)** réelle de fin de présoufflage est décrétée inférieure à la pression **(P$_{th}$)** théorique de fin de présoufflage, une opération consistant à commander une augmentation du débit **(D$_P$)** de présoufflage.

5. Procédé selon l'une des revendications précédentes, **caractérisé en ce que** la pression **(P$_F$)** réelle de fin de présoufflage est calculée par interpolation à partir de mesures de pression mémorisées dans le moule **(8)** à des instants antérieurs et postérieurs à l'instant **(t$_F$)** calculé de fin de présoufflage.

6. Produit programme d'ordinateur destiné à être implémenté sur une unité **(24)** de contrôle d'une machine **(1)** de fabrication de récipients **(2)** à partir d'ébauches **(3)** en matière plastique, qui comprend des instructions pour la mise en oeuvre des opérations du procédé selon l'une de revendications précédentes.

**Patentansprüche**

1. Verfahren zum Herstellen eines Behälters (2) durch Streckblasen in einer Form (8) ausgehend von einem Rohling (3) aus Kunststoff, das die folgenden Schritte umfasst, die darin bestehen:

- den Rohling (3), der vorher erwärmt worden ist, in die Form (8) einzubringen;
- das Öffnen eines Vorblas-Elektroventils (17) zu steuern, um eine Kommunikation zwischen dem Innenraum der Form (8) und einer Gasquelle (15) mit einem vorgegebenen Vorblasdruck (P$_P$) und einem vorgegebenen Vorblasdurchsatz (D$_P$) herzustellen;
- den Druck (P), der in dem Rohling (3) herrscht, zu messen;
- einen Zeitpunkt (t$_A$), der wirklicher Vorblasbeginn-Zeitpunkt genannt wird, bei dem der Druck (P) in dem Rohling (3) anzusteigen beginnt, zu detektieren;
- diesen Zeitpunkt (t$_A$) zu speichern;
- einen Vorblasende-Zeitpunkt (t$_F$) zu berechnen, derart, dass:

$$t_F = t_A + \Delta t - \delta$$

gilt, wobei:

$\Delta t$ eine im Voraus definierte Öffnungsdauer des Vorblas-Elektroventils (17) ist,
$\delta$ eine vorgegebene Konstante ist,

- einen Vorblasende-Ist-Druck (P$_F$) anhand der ausgeführten Druckmessungen abzuleiten,
- den Vorblasende-Ist-Druck (P$_F$), der auf diese Weise bestimmt worden ist, mit einem theoretischen vorgegebenen Vorblasende-Druck (P$_{th}$) zu vergleichen,
- dann, wenn für den Vorblasende-Ist-Druck (P$_F$) und den theoretischen Vorblasende-Druck (P$_{th}$) bestimmt wird, dass sie nicht gleich sind, eine Veränderung des Vorblasdurchsatzes (D$_P$) zu steuern.

**2.** Verfahren nach Anspruch 1, **dadurch gekennzeichnet, dass** die Konstante δ der Ansprechzeit eines Blas-Elektroventils (22) entspricht, dessen Öffnung eine Kommunikation zwischen dem Innenraum der Form (8) und einer Gasquelle (20) auf einem Blasdruck, der größer als der Vorblasdruck ist, herstellt.

**3.** Verfahren nach Anspruch 1 oder 2, das dann, wenn für den Vorblasende-Ist-Druck ($P_F$) bestimmt wird, dass er größer als der theoretische Vorblasende-Druck ($P_{th}$) ist, einen Schritt umfasst, der darin besteht, eine Verringerung des Vorblasdurchsatzes ($D_P$) zu steuern.

**4.** Verfahren nach Anspruch 1 oder 2, das dann, wenn für den Vorblasende-Ist-Druck ($P_F$) bestimmt wird, dass er kleiner als der theoretische Vorblasende-Druck ($P_{th}$) ist, einen Schritt umfasst, der darin besteht, eine Erhöhung des Vorblasdurchsatzes ($D_P$) zu steuern.

**5.** Verfahren nach einem der vorhergehenden Ansprüche, **dadurch gekennzeichnet, dass** der Vorblasende-Ist-Druck ($P_F$) durch Interpolation ausgehend von gespeicherten Druckmessungen in der Form (8) zu Zeitpunkten, die früher oder später als der berechnete Vorblasende-Zeitpunkt ($t_F$) sind, berechnet wird.

**6.** Computerprogrammprodukt, das dazu bestimmt ist, in einer Steuereinheit (24) einer Maschine (1) für die Herstellung von Behältern (2) ausgehend von Rohlingen (3) aus Kunststoff implementiert zu sein, und das Befehle für die Ausführung der Schritte des Verfahrens nach einem der vorhergehenden Ansprüche enthält.

**Claims**

**1.** Method for manufacturing a container (2) by drawing and blowing in a mould (8) from a blank (3) of plastic material, which comprises the operations of:

- introducing the preheated blank (3) into the mould (8) ;
- controlling the opening of a pre-blowing solenoid valve (17) to connect the interior of the mould (8) with a source (15) of gas at a pre-blowing pressure ($P_P$) and a pre-blowing flow rate (Dp) that are predetermined;
- measuring the pressure (P) prevailing inside the blank (3);
- detecting an instant ($t_A$), called actual pre-blowing start instant, at which the pressure (P) in the blank (3) begins to increase;
- storing this instant ($t_A$);

- calculating an end-of-pre-blowing instant ($t_F$) such that:

$$t_F = t_A + \Delta t - \delta,$$

in which:

   $\Delta t$ is a predetermined opening time of the pre-blowing solenoid valve (17),
   $\delta$ is a predetermined constant,

- deducing therefrom an actual end-of-pre-blowing pressure ($P_F$) from the pressure measurements performed,
- comparing the duly determined actual end-of-pre-blowing pressure ($P_F$) with a predetermined theoretical end-of-pre-blowing pressure ($P_{th}$),
- if the actual end-of-pre-blowing pressure ($P_F$) and the theoretical end-of-pre-blowing pressure ($P_{th}$) are found not to coincide, controlling a modification of the pre-blowing flow rate ($D_P$).

**2.** Method according to Claim 1, **characterized in that** the constant δ corresponds to the response time of a blowing solenoid valve (22), the opening of which connects the interior of the mould (8) with a source (20) of gas at a blowing pressure greater than the pre-blowing pressure.

**3.** Method according to Claim 1 or 2, which comprises, if the actual end-of-pre-blowing pressure ($P_P$) is found to be greater than the theoretical end-of-pre-blowing pressure ($P_{th}$), an operation consisting in controlling a reduction of the pre-blowing flow rate ($D_P$).

**4.** Method according to Claim 1 or 2, which comprises, if the actual end-of-pre-blowing pressure ($P_F$) is found to be less than the theoretical end-of-pre-blowing pressure ($P_{th}$), an operation consisting in controlling an increase in the pre-blowing flow rate ($D_P$).

**5.** Method according to one of the preceding claims, **characterized in that** the actual end-of-pre-blowing pressure ($P_F$) is calculated by interpolation from stored measurements of pressure in the mould (8) at instants before and after the calculated end-of-pre-blowing instant ($t_F$).

**6.** Computer program product intended to be implemented on a control unit (24) of a machine (1) for manufacturing containers (2) from blanks (3) of plastic material, which comprises instructions for applying the operations of the method according to one of the preceding claims.

FIG.1

# FIG.2

**EP 2 855 114 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008081107 A
- US 20100276849 A
- WO 2012035260 A
- FR 2872082
- WO 2006008380 A